# EUROPEAN PATENT APPLICATION

(11) **EP 0 639 018 A2**
(43) Date of publication of application: **15.02.1995**
(21) Application number: 94304987.4
(22) Date of filing: 06.07.1994
(51) Int. Cl.: H04M 3/50

(54) **Time sensitive messaging**

(30) Priority: 16.07.1993 US 92652
(71) Applicant: AT&T Corp., New York, NY 10013-2412 (US)
(72) Inventor: Einstein, David S., Lincroft, New Jersey 07738 (US); Hanke, Roger Alan, Elberon, New Jersey 07740 (US); Kierce, Daniel, Middletown, New Jersey 07748 (US); Valle, Silvano, Staten Island, New York 10307 (US)
(74) Representative: Watts, Christopher Malcolm Kelway, Dr.

(57) **Abstract**

Time sensitive messages are sent from a sending station device (4) to a receiving station device (6). The messages are sent during calling party defined send windows. The messages include read windows that restrict the called party's access to the message after delivery to the receiving station. If a message is not delivered during the send window, or if a message is not read during the read window, the calling party may specify that an alternate message should be delivered.

## Description

### Background of the Invention

### Field of the Invention

The present invention relates to communications; and more specifically, to time sensitive communications.

### Description of the Prior Art

The cost of distributing information to large numbers of people in widely-dispersed areas is reduced by transmitting the information during a communication discount period. Unfortunately, the discount period may not correspond to the time at which it is desirable to release time-sensitive information such as new pricing information. Therefore, there is a need for a system to distribute information to a called party's terminal or station while preventing the called party from accessing the information before a predetermined time.

U.S. patent 4,939,771 entitled "Attendant-Controlled Call Message Delivery System and Method" discusses sending a message to a messaging operation center with a specified delivery window. An attendant or appropriate circuitry then attempts to deliver the message to the specified party within the specified delivery window. This system enables a user to control the delivery window and thereby take advantage of a communication discount period; however, it does not provide control over the called party's access to the message after delivery.

### Summary of the Invention

Time-sensitive messaging provides independent control over a message's delivery window and the time at which the called party may access the message by sending a message to a called station and storing the message in the called station while controlling a called party's access to the message. The called party's access to the message is controlled by specifying a time window during which the called party may have access to the message. This permits distributing time-sensitive information such as pricing information, during a discount communication period while preventing access to the new prices until a later time that may be outside of the discount communication period.

### Brief Description of the Drawing

FIG. 1 is a block diagram illustrating a sending station device and a receiving station device connected by a communication link;
FIG. 2 is a table used by the sending station device;
FIG. 3 is a flow chart of a program carried out by the sending station's microprocessor;
FIG. 4 is a flow chart of a receive interrupt routine executed by the sending station device;
FIG. 5 is a flow chart of a user interface interrupt carried out by the sending station device;
FIG. 6 is a table used by the receiving station device;
FIG. 7 is a flow chart of a program carried out by the receiving station device; and
FIG. 8 is a flow chart of a receive interrupt routine executed by the receiving station device.

### Detailed Description

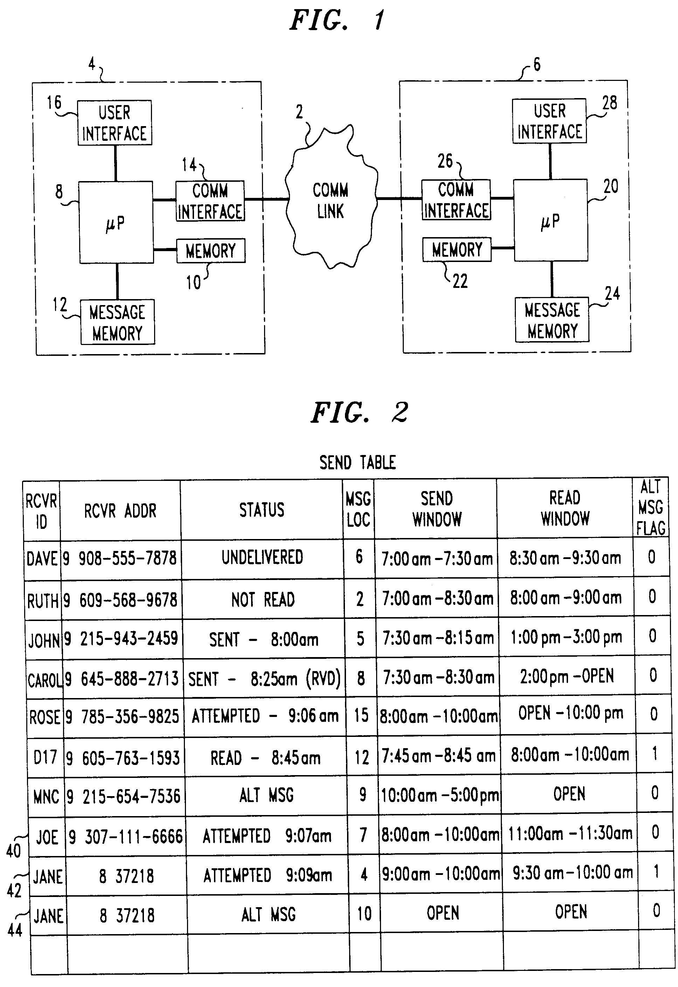

FIG. 1 illustrates communication link 2 which connects sending station device 4 and receiving station device 6. Communication link 2 can be any well-known communication channel such as an analog or digital communication channel, a packet switched channel, an optical fiber channel, a cellular channel, a radio channel, a laser or microwave-based channel, a telephone network or a combination of any of the above. Sending station device 4 includes microprocessor 8, memory 10, message memory 12, communication channel interface 14 and user interface 16. Microprocessor 8 operates sending station device 4 by executing programs that are stored in memory 10. Memory 10 may also be used as a scratch pad memory by microprocessor 8. Microprocessor 8 may be a microcomputer, specialized hardware, or another device that is capable of executing instructions stored in memory 10. Memory 10 may be fabricated using devices such as a RAM, ROM or E² ROM. Microprocessor 8 communicates over communication link 2 through communication interface 14. Communication interface 14 can be any of the well-known communication interfaces that satisfy protocols, and physical and electrical requirements of communication link 2. It is also possible for communication interface 14 to provide interfaces to several types of communication links and thereby provide microprocessor 8 with several types of communication links to one or more receiving station devices 6. Microprocessor 8 stores messages that will be sent over communication link 2 in message memory 12. Message memory 12 may be fabricated using devices such as a RAM, E² ROM, dynamic RAM, bubble memory, magnetic disk, optical disk or tape. Microprocessor 8 communicates with a calling party through user interface 16. User interface 16 may include items such as a keyboard, speaker, microphone, video camera, display or CRT.

Receiving station device 10 is similar to sending station device 4. Receiving station device 6 includes microprocessor 20, memory 22, message memory 24, communication interface 26 and user interface 28. Microprocessor 20 executes programs stored in memory 22 and stores messages in message memory 24. Microprocessor 20 may be implemented using devices such as a microcomputer, or specialized hardware, capable of executing instructions stored in memory 22. Memory 22 may be implemented using devices such as RAM, ROM and or E² ROM. Message memory 24 may be implemented using devices such as RAM, E² ROM, dynamic RAM, bubble memory, optical disk, magnetic disk or tape. Communication interface 26 provides the protocol, physical, and electrical interface to one or more communication links available to receiving station device 6. Microprocessor 20 communicates with a called party through user interface 28. User interface 28 may include devices such as a keyboard, speaker, microphone, video camera, display or CRT.

It should be noted that each station device may be capable of performing the function of a sending device and a receiving device so that time-sensitive messages may be sent in both directions between stations.

Microprocessor 8 transfers messages stored in message memory 12 to microprocessor 20 over communication link 2. Microprocessor 20 stores the message in memory 24. A calling party enters the message into message memory 12 through user interface 16. When entering the message, the calling party may specify a window of time over which the message should be delivered, and a window of time over which a called party may have access to the message after it has been delivered. Microprocessor 8 will attempt to deliver the message during the message delivery window specified by the calling party. When microprocessor 8 delivers the message to receiving station device 6, it also delivers times that specify a window during which the called party may have access to the message. The called party is prevented from accessing the message stored in memory 24 until the current time is within the access window specified by the calling party. Once within the access window, the called party may access the message through user interface 28. If the access window is past, and if the called party has not accessed the message, the message is deleted from message memory 24 by microprocessor 20. In addition, when the called party accesses the message an acknowledgment signal may be sent to sending station device 4 through communication link 2. The acknowledgment message enables a calling party to determine when the called party accessed the message. If the message is not delivered or if the called party does not access the message, the calling party can specify that a second message is sent to the original called party or another called party.

Microprocessor 8 of sending station device 4 keeps track of multiple messages by using the send table of FIG. 2. The send table is stored in memory 10. The table keeps track of the receiver's ID and address. The ID can be in the form of a name, initials, numbers or letters, and the address can be a phone number, an email address or any other means of identifying where the message is to be sent. It should be noted that it is possible to specify that some messages use one type of communication link while others use another type of communication link. In the receiver address column of entry 40, the numeral 9 in front of a phone number may specify that the message will be sent out over a telephone network. In entry 42, the 8 in front of the 5-digit number may specify using a private microwave communication link. Any convenient addressing scheme can be used to specify the communication link and the called party's address on the communication link. A status column is also provided in the table to keep track of the status for each message. An UNDELIVERED status means the message was not delivered because a communication link with the receiving station could not be established during the send window. The NOT READ status indicates that the message was delivered to the receiving station device, however, the called party did not access the message within the read window. A SENT status and an associated time is used to indicate that a message was delivered to a receiving station at the indicated time, but the called party has not accessed the message. A SENT and a time with a RVD status indicates that the message status was recently reviewed by microprocessor 8 to determine whether the read window had expired without receiving an acknowledgment from the receiving station which indicates that the called party has accessed the message. An ATTEMPT status with the time indicates that microprocessor 8 unsuccessfully attempted to deliver the message to the receiving station at the indicated time. A READ status with a time indicates that the message was successfully delivered to the receiving station, and that the message was accessed by the called party at the time indicated. An ALT MSG (alternate message) status indicates that the message is currently inactive and will be used if the preceding message on the table cannot be delivered or if the preceding message is not accessed within the read window. The message location column indicates where the message is stored within message memory 12. The send window column indicates when a message may be delivered. An OPEN entry preceding a time entry indicates that there is no constraint on the start of the window and an OPEN following a time entry indicates that there is no constraint on the end of the window. An OPEN entry without a time indicates that there are no restrictions on the send window. The read window column indicates the period of time during which a called party is granted access to a message stored within message memory 24 of receiving station device 6. As with the send window, an OPEN entry preceding a time entry indicates that there is no constraint on the start of the window, an OPEN following a time entry indicates that there is no constraint on the end of the window, and an OPEN entry without a time indicates that there are no restrictions on when the called party may access the message. It should be noted that send windows and read windows may overlap. Setting the alternate message flag to 1, indicates that when the message is undelivered or not read, an alternate message should be sent. The alternate message is the next entry in the send table; however, it is possible to use any message as an alternative message. For example, if the message corresponding to entry 42 is undelivered or not read, the message corresponding to entry 44 is sent. The alternate message can be a message such as another message sent to the called party associated with the first message, another message sent to another party or the same message sent to another party.

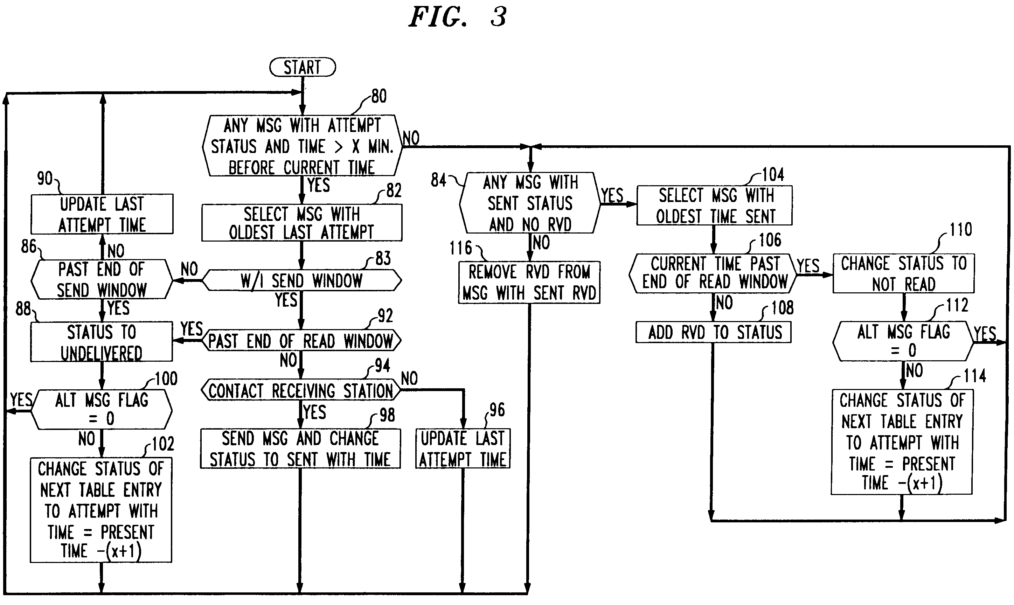

FIG. 3 illustrates a flow chart that is executed by microprocessor 8. Beginning at "start", microprocessor 8 executes decision step 80. In decision step 80 the microprocessor checks the status of the messages in the send table. If any of the statuses are an ATTEMPT with a time that is greater than X minutes before the current time, step 82 is executed. If there are no messages with a status that corresponds to a delivery attempt that has occurred longer than X-minutes before the present, step 84 is executed. The X-number of minutes can be any convenient number of minutes such as 5 minutes. In step 82 microprocessor 8 selects the message with the oldest last attempt time. In step 83 it is determined whether the current time is within the send window as specified by the send table of FIG. 2. If the current time is not within the send window, step 86 determines if the current time is past the end of the send window. If the current time is past the end of the send window, step 88 is executed, and if it is before the end of the send window, the status of the message is updated to ATTEMPT with the current time in step 90. After step 90, processor 8 executes step 80 to determine if there are any additional messages that have an ATTEMPT status with a time that is greater than X-minutes before the current time. Referring back to step 83, if the current time is within the send window, step 92 determines if the current time is past the end of the read window. If it is determined that the current time is past the end of the read window, step 88 is executed, and if it is determined that the current time is prior to the end of the read window, step 94 is executed. In step 94 it is determined whether a communication link can be established with receiving station device 6. If the communication link cannot be established, step 96 is executed to update the status of the message to ATTEMPT with the current time, and processor 8 executes step 80 to determine if there are any additional messages that have an ATTEMPT status with a time that is greater than X-minutes before the current time. If step 94 determines that contact has been established with the receiving station device, step 98 is executed which sends the message to the receiving station by removing the message from the memory location specified in the send table, transferring the messages to communication interface 14, and changing the status of the message to SENT with the time sent. After executing step 98, processor 8 executes step 80 to determine if there are any additional messages that have an ATTEMPT status with a time that is greater than X-minutes before the current time.

With regard to steps 86 and 92, that is, when the current time is past the end of the send window or when the current time is past the end of the read window, step 88 is executed. Step 88 changes the status of the message to UNDELIVERED. Step 100 determines whether the alternate message flag is set to 0 or 1. If the flag is set to 0, there are no alternate messages and the microprocessor executes step 80. If the message flag is set to 1, it indicates that an alternate message is to be sent. In step 102, microprocessor 8 changes the status of the next entry on the send table to ATTEMPT with the current time minus (X+1) number of minutes. This will result in microprocessor 8 attempting to deliver the alternate message after returning to step 80.

After cycling through step 80 and discovering that there are no further messages that have an ATTEMPT status with a prior attempt time that is greater than a predefined number of minutes before the current time, microprocessor 8 executes step 84 to determine whether there are any messages with a SENT status and no reviewed (RVD) tag. As will be seen, microprocessor 8 uses the RVD tag to keep track of which messages have been reviewed when determining whether the called party has accessed the delivered message within the read window. If step 84 results in a determination that a message has been sent and does not contain a RVD tag, step 104 is executed. In step 104 the message with a SENT status and the oldest sent time is reviewed. In step 106 the current time is compared with the end of read window to determine whether the called party has accessed the message before the expiration of the read window. If the current time is prior to the end of the read window, the status of the message is modified to include a RVD tag in step 108. Microprocessor 8 then returns to step 84. If in step 106 it is determined that the present time is past the end of the read window, step 110 changes the status of the message to NOT READ. Step 112 is then executed to determine whether the alternate message flag is 0 or 1. If the message flag is 0, it indicates that there is no alternate message and microprocessor 8 executes step 84. If step 112 determines that the alternate message flag is 1, step 114 is executed and the status of the next entry on the send table is changed to ATTEMPT with a time equal to the present time minus (X+1) minutes. As was discussed with regard to step 102, this change in status will result in the alternate message being reviewed for delivery the next time microprocessor 8 returns to step 80. After executing step 114, microprocessor 8 returns to step 84. With regard to step 84, if all the messages with a SENT status have a RVD tag, step 116 is executed. In step 116, the statuses of all messages with a SENT status and a RVD tag are modified by removing the RVD tag. After removing the RVD tags, microprocessor 8 returns to step 80 to review the message table to determine if a delivery attempt should be made for any messages. Microprocessor 8 continues to cycle through this flow chart until it is interrupted by a receive interrupt or a user interface interrupt.

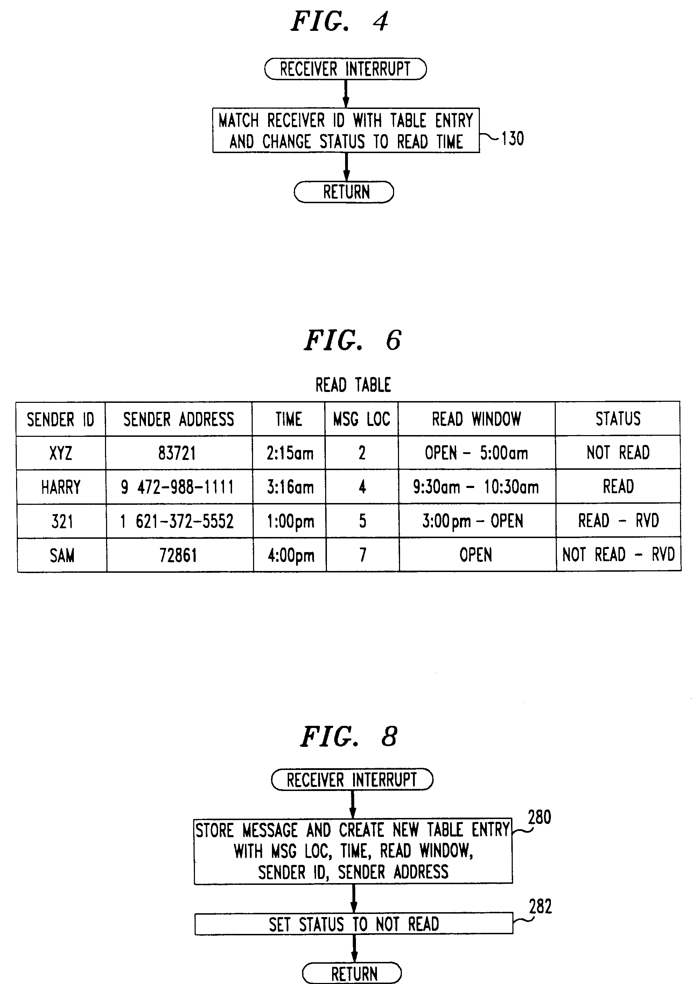

FIG. 4 illustrates the receive interrupt routine. The receive interrupt routine is executed when communication interface 14 receives an acknowledge message from communication link 2. Communication interface 14 stores a receiver ID associated with the incoming acknowledge message and interrupts microprocessor 8. Microprocessor 8 executes step 130 to match the receiver ID from communication interface 14 with a receiver ID in the send table. After locating the proper entry in the table by matching the receiver IDs, microprocessor 8 changes the status of that message to READ and the time at which the acknowledgment was received. Microprocessor 8 then returns from the interrupt routine to resume the commands that were previously being executed.

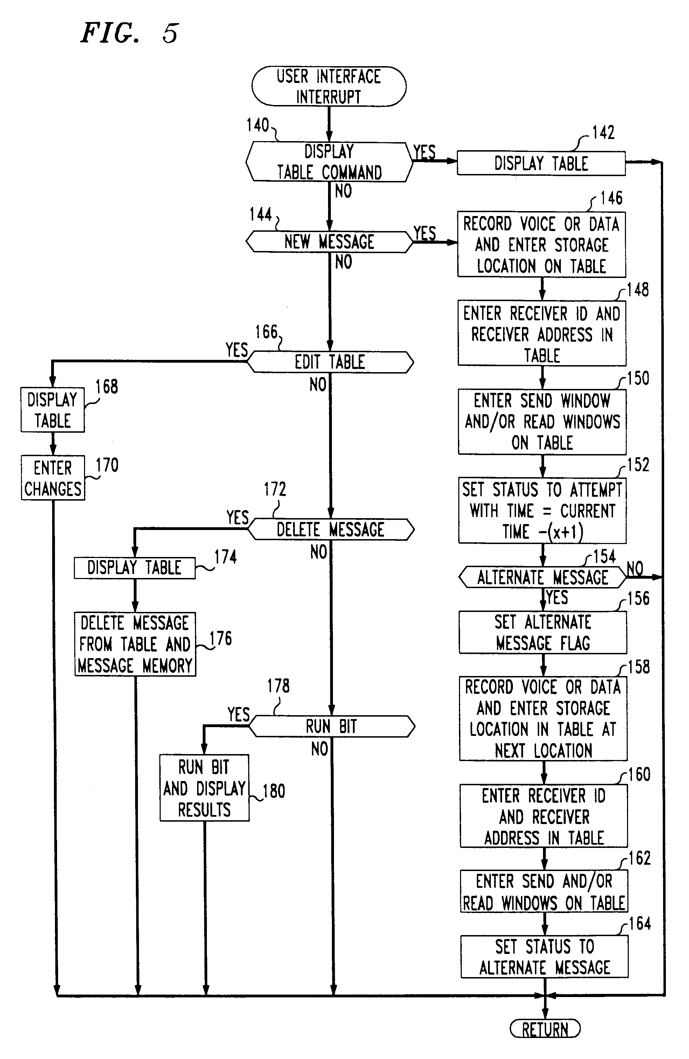

When a calling party communicates with microprocessor 8 through user interface 16, a user interface interrupt is generated. The calling party enters commands through user interface 16 using devices such as a keyboard, voice recognition equipment or a touch-sensitive screen. FIG. 5 illustrates a flow chart that is executed when a user interface interrupt is received. After receiving the user interface interrupt, microprocessor 8 executes decision step 140. If decision step 140 indicates that the calling party has entered a display table command, step 142 is executed and the send table is displayed on a display device of user interface 16. After executing step 142, microprocessor 8 returns from the interrupt. If step 140 determines that the display table command was not entered, step 144 is executed to determine if a new message command was entered. If a new message command was entered, step 146 is executed where a voice, video or data message is stored in message memory 12 and a new entry is created on the send table. After recording the message, step 148 is executed by entering a calling party supplied receiver ID and receiver address into the send table. The receiver address may be supplied by the calling party, or microprocessor 8 may find the address in a directory that cross references receiver IDs and receiver addresses. In step 150, a send window and a read window are entered into the table using the times provided by the calling party. After executing step 150, step 152 is used to set the status of the new message to ATTEMPT with a time equal to the current time minus (X+1) minutes. As discussed earlier with regard to steps 102 and 114, this will result in microprocessor 8 reviewing the new message for possible transmission when microprocessor 8 returns to step 80. After executing step 152, step 154 is executed to determine if the calling party has entered an alternate message command. If the calling party does not specify an alternate message, the alternate message flag is set to 0 and microprocessor 8 returns from the interrupt routine. If an alternate message command is entered, the alternate message flag of the new message is set to 1 in step 156. In step 158, the alternate voice, video or data message is stored in message memory 12 and the storage location of the alternate message is entered in a new send table entry that corresponds to the alternate message. The send table entry for the alternate message immediately follows the send table entry that references the alternate message. In step 160 the receiver ID and receiver address associated with the alternate message are entered into the table. In step 162 the calling-party-provided send and read windows are entered into the table and in step 164 the status of this message is entered as alternate message. After step 164 microprocessor 8 returns from the interrupt routine. It is also possible to execute step 154 after step 164 to provide the calling party with the ability to specify additional alternate messages that may be delivered if the first alternate message is undelivered or not read.

If step 144 determines that a new message command has not been entered, step 166 is executed. In step 166 it is determined whether an edit table command has been entered. If an edit table command has been entered, step 168 is executed to display the table and step 170 is executed to change the table in accordance with changes provided by the calling party through user interface 16. After the execution of step 170, microprocessor 8 returns from the interrupt routine. If in step 166 it is determined that an edit table command was not provided, step 172 is executed. Step 172 determined whether a delete message command was entered. The delete message command may be used to delete messages that have a status such as read or undelivered. If a delete message command was entered, step 174 is executed to display the send table, and step 176 is executed to delete the message from the send table and message memory as indicated by the calling party through user interface 16. After the execution of step 176, microprocessor 8 returns from the interrupt routine. If step 172 determines that a delete message command was not provided, step 178 is executed. In step 178 it is determined whether a run built-in-test (BIT) command was provided. If a run built-in-test command was provided, a built-in-test routine is executed and the results are displayed in step 180. After steps 178 or 180, microprocessor 8 returns from the user interface interrupt routine.

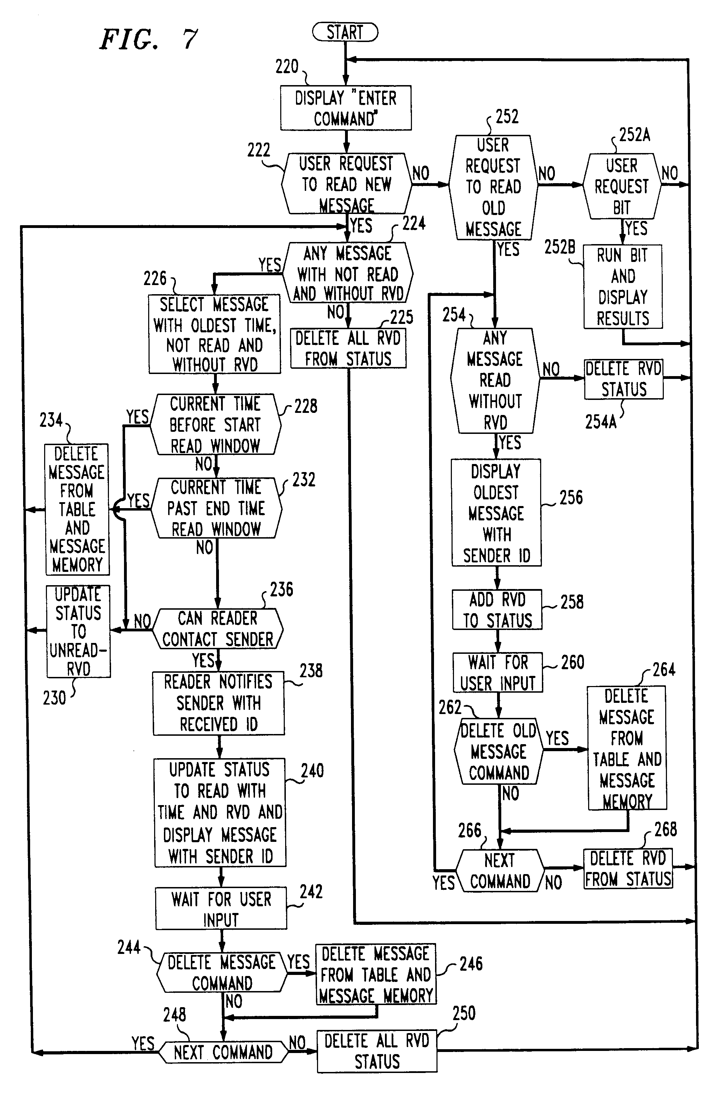

FIG. 6 illustrates a read table used by microprocessor 20 of receive station device 6. The table is stored in memory 22. Each row in the table corresponds to a message received from a sending station. The sender ID column is used to identify the sender of the message and the sender addressed column is used to provide a phone number or access address through communication link 2 to the sender. The sender address can be a phone number, an e-mail address or any other means of identifying where the acknowledgment message is to be sent. The sender ID may be in the form of a name, initials, numbers or letters. The time column indicates the time at which the message was received from the sender and the message location table indicates the message's storage location within message memory 24. The read window column indicates the times that define a read window during which the called party is permitted access to a message. An OPEN entry preceding a time entry indicates that there is no constraint on the start of the window, an OPEN following a time entry indicates that there is no constraint on the end of the window, and an OPEN entry without a time indicates that there are no restrictions on when the called party may access the message. The status column indicates the status of each message. The statuses include NOT READ which indicates that the message has not been read, READ which indicates that the message has been read, READ with a RVD tag which indicates that microprocessor 20 has already displayed the message to the called party in response to a read message command, and NOT READ with a RVD tag which indicates that the message has not been read and that microprocessor 20 has recently reviewed the table entry to determine whether the current time is within the read window specified on the table.

FIG. 7 illustrates a flow chart of a program that is executed by microprocessor 20. The program is stored in memory 22. Microprocessor 20 begins execution of the program by executing step 220 in which "enter command" is displayed on the display of user interface 28. In step 222, it is determined whether the called party or user has requested to read new messages via user interface 28. If the called party has requested to read new messages, step 224 is executed. In step 224, it is determined whether any messages have a NOT READ status without a RVD tag. If there are messages that have not been read and that do not have a RVD tag, step 226 is executed. In step 226, the unread and unreviewed message with the oldest time tag is selected. Step 228 determines whether the current time is before the start time of the read window. If it is determined that the current time is before the start time of the read window, the message is not displayed to the called party and step 230 changes the status of the unread message to include a RVD tag. After step 230, microprocessor 20 returns to step 224 to determine if there are additional unread messages that do not have a RVD tag. If step 228 determines that the current time is after the start time of the read window, step 232 determines whether the current time is past the end time of the read window. If the current time is past the end time of the read window, step 234 deletes the message from message memory 24, and the message's entry from the read table. After execution of step 234, microprocessor 20 returns to step 224. In reference to step 232, if it is determined that the current time is prior to the end of the read window, step 236 is executed. In step 236, microprocessor 20 attempts to make contact with the sender to acknowledge that the called party is accessing the message. Microprocessor 20 carries this out by using communication interface 26 and the sender address from the read table. If microprocessor 20 cannot contact the sending station device, the message is not displayed to the called party and step 230 is executed. Step 230 changes the message's status to UNREAD and RVD. It is also possible to modify the flow chart of FIG. 7 to display the message to the called party even if the reading device cannot contact the sending device. After step 230, microprocessor 20 returns to step 224. If in step 236, the microprocessor can contact the sending device, step 238 is executed. In step 238, microprocessor 20 uses the sender address from the read table to send an acknowledgment message and receiver's ID to the sending station. After step 238, step 240 changes the status of the message to READ and RVD. Step 240 also displays the message and sender ID to the called party using a speaker, display or CRT. In step 242 microprocessor 20 waits for an additional input from the called party. After step 242, step 244 determines whether the additional input is a delete message command. If a delete message command is received, step 246 deletes the message from message memory 24 and the read table. If a delete message command is not received, or after the message has been deleted, step 248 is executed where it is determined whether a next message command is received from the called party. If a next message command is not received, step 250 is executed where the RVD tag is removed from all messages. After executing step 250, command 220 is executed. If a next message command is detected in step 248, microprocessor 20 executes step 224. If step 224 determines that there are no additional messages that have a NOT READ status without a RVD tag, step 225 removes the RVD tag from all messages. After step 225, step 220 is executed.

In reference to step 222, if it is determined that the called party is not requesting to read a new message, step 252 is executed and it is determined whether the called party has entered a request to read an old message. If a request to read an old message has been entered, step 254 determines whether any messages have a status of READ without a RVD tag. If any such messages are located in the read table, step 256 is executed where the message with the oldest received time is displayed with a sender ID. After executing step 256, the RVD tag is added to the status of the message. In step 260, microprocessor 20 waits for additional input from the called party through user interface 28. In step 262, it is determined whether the called party has entered a delete message command. If a delete message command is entered, step 264 deletes the message from the read table and message memory 24. If a delete message command is not detected in step 262, or if the message is deleted in step 264, step 266 is executed where it is determined whether a next message command has been received from the called party. If a next command is received, microprocessor 20 executes step 254. If step 254 determines that there are no additional messages that have a status of READ and no RVD tag, step 254A removes the RVD tag from all message entries. After step 254A, microprocessor 20 executes step 220. In reference to step 266, if a next command is not received, microprocessor 20 executes step 268 where the RVD tag is deleted from the status of all messages. After step 268, microprocessor 20 returns to step 220.

If step 252 determines that the called party has not requested to read old messages, step 252A determines if the called party has requested the execution of built-in-test (BIT). If a BIT request was entered, step 252B runs a BIT routine and displays the results. After step 252B, microprocessor 20 executes step 220. If step 252A determines that the called party has not requested the execution of BIT, step 220 is executed.

FIG. 8 illustrates a flow chart for the receive interrupt routine. Messages from communication link 2 are received by communication interface 26. When an incoming message is detected, communication interface 26 interrupts microprocessor 20. When interrupted, microprocessor 20 executes step 280. Step 280 stores the message in message memory 24, and creates a new entry in the read table which includes the location of the message in memory 24, the time of the message receipt, the times that define the read window, the sender ID and the sender address. In step 282, NOT READ is added to the status of the new message. After step 282 microprocessor 20 returns from the interrupt routine to resume executing the command that was in process when the interrupt was received.

## Claims

1. A method for communicating, characterized by the steps of:
sending a message from a sending device (4) to a receiving device (6);
storing a message in said receiving device (6); and
controlling a called party's access to said message based on a predefined time.

2. The method of claim 1, characterized in that said step of sending comprises sending said message during a predefined period of time.

3. The method of claim 1, characterized in that said step of controlling comprises preventing said called party's access to said message before said predefined time.

4. The method of claim 1, characterized in that said step of controlling comprises preventing said called party's access to said message after said predefined time.
